# EUROPÄISCHE PATENTSCHRIFT

(11) **EP 3 071 304 B1**
(45) Veröffentlichungstag und Bekanntmachung des Hinweises auf die Patenterteilung: **12.06.2019**
(21) Anmeldenummer: 15744095.9
(22) Anmeldetag: 05.08.2015
(51) Int. Cl.: A63B 24/00, A63B 23/12, A63B 23/02, A63B 71/06, A63B 21/008, A63B 22/00, A63B 23/035, A63B 21/005, A63B 21/00

(54) **GERÄT ZUM AUSFÜHREN VON BEWEGUNGEN DURCH SCHWERPUNKTVERLAGERUNG UND/ODER MUSKELBETÄTIGUNG EINES MENSCHLICHEN KÖRPERS**
DEVICE FOR CARRYING OUT MOVEMENTS BY SHIFTING THE CENTER OF GRAVITY AND/OR ACTUATING MUSCLES OF A HUMAN BODY
APPAREIL PERMETTANT D'EXÉCUTER DES MOUVEMENTS PAR DÉPLACEMENT DU CENTRE DE GRAVITÉ ET/OU ACTIONNEMENT DE MUSCLES DU CORPS HUMAIN

(30) Priorität: 17.11.2014 DE 102014223446
(43) Veröffentlichungstag der Anmeldung: 28.09.2016
(73) Patentinhaber: ICAROS GmbH, 82152 Planegg (DE)
(72) Erfinder: SCHOLL, Johannes, 80686 München (DE); SCHMIDT, Michael, 82234 Wessling (DE)
(74) Vertreter: Prüfer & Partner mbB Patentanwälte · Rechtsanwälte
(86) Internationale Anmeldenummer: PCT/EP2015/068078
(87) Internationale Veröffentlichungsnummer: WO 2016/078785

(56) Entgegenhaltungen:
- WO-A1-2010/036275
- WO-A1-2010/059066
- FR-A1- 2 852 526
- GB-A- 2 510 136
- JP-A- 2009 131 647
- US-A- 5 830 158
- US-A1- 2010 022 354
- US-A1- 2011 039 669

## Beschreibung

Die Erfindung betrifft ein Gerät zum Ausführen von Bewegungen durch Schwerpunktverlagerung und/oder Muskelbetätigung eines menschlichen Körpers.

Aus der Sportgeräteentwicklung sind Trainingsgeräte zum Einsatz in Fitnessstudios bekannt, wie beispielsweise Laufbänder, Stepper oder Fahrradergometer. Auf diesen sitzt bzw. steht ein Anwender und führt vorgegebene Bewegungen aus. Dabei sollen durch die körperliche Betätigung Kalorien verbrannt, ein Trainingseffekt erzielt, sowie Spaß für den Benutzer generiert werden.

Des Weiteren sind Spielekonsolen wie eine Microsoft Wii® oder eine Sony PlayStation Move® bekannt, bei welchen der Benutzer körperliche Bewegungen ausführt, die durch einen Sensor erfasst werden, wodurch ein Spielegeschehen auf einem TV-Bildschirm beeinflusst bzw. gesteuert werden kann.

Des Weiteren sind 3D-Kinos bekannt, in welchen Filme mit dreidimensionalem Effekt gezeigt werden, um dem Besucher ein möglichst realitätsnahes Filmerlebnis anbieten zu können. Durch einen 3D-Effekt bei Filmen soll zum einen der Spaß beim Zuschauen erhöht werden, des Weiteren soll die Handlung auf der Leinwand realer wirken und den Kinobesucher vergessen lassen, dass er sich in einer Kinovorführung befindet. Er soll von seinem Empfinden her möglichst selbst Teil des Geschehens werden.

Des Weiteren sind Simulatoren bekannt, in welchen ein Benutzer beispielsweise ein Formel 1-Auto oder ein Rennmotorrad steuert, wobei dem Benutzer anstatt einer realen Windschutzscheibe ein System aus Computermonitoren zur Verfügung steht. Des Weiteren kann ein realitätsnahes Fahrerlebnis dadurch erhöht werden, dass der Benutzer in einem realitätsgetreuen nachgebildeten Fahrzeugcockpit Platz nimmt und sich die Bedienelemente nur unwesentlich von denen eines realen Fahrzeugs unterscheiden.

Des Weiteren sind Videobrillen bekannt, die auf dem Kopf eines Benutzers angeordnet und fixiert werden. Auf solch einer Videobrille kann visuell eine virtuelle Realität ausgegeben werden, wobei sich ein Anwender während der Benutzung eines solchen Gerätes so fühlt, als könne er sich in der virtuellen Realität umsehen und sich in dieser frei bewegen. Wenn der Benutzer seinen Kopf dreht, und damit auch die Videobrille, empfängt ein stationär angeordnetes Empfängersystem die gemeinsame Bewegung von Kopf und Brille und leitet Bewegungsrichtung und Bewegungsgeschwindigkeit an eine Recheneinheit weiter, die das mittels der Videobrille angezeigten Videobild entsprechend berechnet, so dass für einen Anwender der Eindruck besteht, als könne er sich wirklich im virtuellen Raum bewegen.

Des Weiteren sind Flugsimulatoren zur Pilotenausbildung bekannt, welche zum einen ein originalgetreues Cockpit nachbilden, zum andern aber auch die tatsächlichen Bewegungen und Beschleunigungen, die während des Fluges, beim Start und bei der Landung auf ein reales Cockpit wirken, simulieren. Dies geschieht beispielsweise dadurch, dass das Cockpit auf einer Bewegungsplattform, wie beispielsweise einem Tripod angeordnet ist, und das Cockpit durch die Bewegungsplattform in verschiedene Richtungen bewegt, gekippt und beschleunigt werden kann.

Aus dem Stand der Technik sind des Weiteren Trainingsgeräte bekannt, wie in GB 2 510 136 A offenbart.

Aus dem Stand der Technik ist des Weiteren eine Vorrichtung zum Testen der physischen Stabilität eines Patienten bekannt, wie in US 5 830 158 A offenbart.

Aus dem Stand der Technik ist des Weiteren ein Balancier-Therapiersystem bekannt, wie in US 2011/039669 A1 offenbart.

Dokument US5830158 A beschreibt ein Gerät gemäß dem Oberbegriff des Anspruchs 1.

Es ist Aufgabe der vorliegenden Erfindung, ein Gerät zum Ausführen von Bewegungen durch Schwerpunktverlagerung und/oder Muskelbetätigung eines menschlichen Körpers anzubieten, wobei ein Benutzer durch die Bewegung seines Hüftbereichs, während sich der Benutzer auf dem Gerät abstützt, eine Schwerpunktverlagerung generiert, und einen beweglichen Teil des Gerätes inklusive seinem eigenen Körper in verschiedene Richtungen neigen kann. Dabei ist es des Weiteren denkbar, dass der Benutzer während dessen eine Videobrille trägt und sich durch das Gesamtsystem von Videobrille und besagtem Bewegungsgerät in einer virtuellen Umgebung bewegen kann sowie mit dieser interagiert. Dabei können die vom Benutzer verursachten Bewegungen alleine durch die Schwerkraft mittels Schwerpunktverlagerung generiert werden. Zudem ist es auch denkbar, dass die Bewegungen des Geräts durch am Gerät angeordnete Motoren oder Dämpfer beeinflusst werden. Es ist des Weiteren denkbar, ein Gesamtsystem aus dem Gerät und einer Vorrichtung zur visuellen Ausgabe von bewegten Bildern vorzusehen, wobei der Benutzer auf dem Gerät wenigstens teilweise von der Ausgabevorrichtung umschlossen wird. Die Ausgabevorrichtung könnte dabei halbkreisförmig ausgeführt sein, wobei sich der Kopf des Benutzers inkl. dem vorderen Teil des Geräts innerhalb der Ausgabevorrichtung befindet. Durch eine visuelle Ausgabe von beispielsweise einer Simulatoranwendung auf der Innenseite der Vorrichtung könnte dadurch ein realitätsnaher Eindruck des Benutzers während einer Simulatoranwendung bewirkt werden. Dabei müsste die Ausgabevorrichtung so dimensioniert sein, dass sich der Benutzer auf dem Gerät frei bewegen kann, ohne an die Ausgabevorrichtung anzustoßen. Des Weiteren könnten durch die Ausgabevorrichtung sowie auf einer Videobrille dreidimensionale Bilder wiedergegeben werden.

Diese Aufgabe wird mit einem Gerät sowie einem System gelöst, welches die Merkmale des Anspruchs 1 bzw. des Anspruchs 18 aufweist.

Vorteilhafte Weiterbildungen sind Gegenstand der Unteransprüche.

Durch die freie Bewegbarkeit des Hüftbereiches eines Anwenders kann gewährleistet werden, dass dieser seinen Schwerpunkt bzw. den Gesamtschwerpunkt des beweglichen Teils des Gerätes sowie seines eigenen Körpers so verlagern kann, dass diese Schwerpunktsverlagerung zu einer Bewegung des Gerätes aufgrund von Schwerkraft führt, wodurch ein besonders angenehmes Benutzungsverhalten resultiert. Denn die Vorrichtung reagiert dadurch besonders schnell auf Wünsche zur Bewegungsänderung, und nach einer kurzen Eingewöhnungszeit ist es einem Benutzer möglich, das Gerät intuitiv und dosiert zu bedienen bzw. zu bewegen.

Eine Bewegung von Benutzer und beweglichen Teilen des Gerätes ist um zwei virtuelle Achsen möglich, eine Längsachse und eine Querachse. Diese bilden vorteilhafterweise einen Schnittpunkt, wodurch es dem Benutzer ermöglicht wird, eine Bewegung um die Längsachse und eine Bewegung um die Querachse mit identischem Kraftaufwand auslösen zu können.

Vorteilhafterweise liegt der gemeinsame Schwerpunkt von dem Körper des Benutzers und den beweglichen Teilen des Gerätes knapp unter dem Schnittpunkt von Längs- und Querachse. Dadurch befindet sich das bewegliche System in einem stabilen Zustand. Dass der Schwerpunkt unterhalb des Schnittpunktes von Längs- und Querachse angeordnet ist, bedeutet, dass der Schwerpunkt in vertikaler Richtung unter dem Schnittpunkt der Achsen liegt. Vorteilhafterweise ist es dem Benutzer möglich, seinen Körperschwerpunkt durch eine Bewegung des Hüftbereichs so anzuordnen, dass daraus eine Auslenkung des beweglichen Teils der Vorrichtung resultiert bzw. verursacht wird. Außerdem entsteht für den Benutzer aufgrund der freien Beweglichkeit seines Hüftbereichs bzw. seines Körperschwerpunkts der Eindruck, als würde er schweben.

Vorteilhafterweise ist das Gerät in einen oberen und einen unteren Teil getrennt (in vertikaler Richtung oben bzw. unten), wobei die Trenn- bzw. Kontaktebene in dem Bereich der Basis liegen kann. In dieser Ebene liegen jeweils eine ebene Fläche des oberen und des unteren Teils flanschartig aneinander an. Die Kontaktebene wird durch einen Bolzen geschnitten, welcher in den oberen sowie in den unteren Teil des Gerätes eingeführt ist. Die axiale Richtung des Bolzens stimmt nicht mit der Normalenrichtung der Kontaktebene überein. Aufgrund der daraus resultierenden Kinematik hebt sich die Geometrie der oberen Kontaktfläche von der Geometrie der unteren Kontaktfläche ab (und umgekehrt), wenn eine Verdrehung zwischen oberem und unterem Geräteteil ausgelöst wird. Ein gegenseitiges Abheben kann dadurch ausgelöst werden, dass sich eine Umfangskante der einen Kontaktfläche zumindest teilweise in die andere Kontaktfläche hineindreht bzw. in diese zwangsweise hinein geschwenkt wird und dadurch zwangsweise entlang des Bolzens nach oben bewegt wird. Des Weiteren kann die axiale Richtung des Bolzens vertikal sein. Wenn nun ein Benutzer des Gerätes eine ruckartige Bewegung ausführt, aus der ein Drehmoment um die Hochachse des Gerätes resultiert, würde dieses Drehmoment bei einer einteiligen Geräteausführung zu einem Rucken bzw. Wackeln des gesamten Gerätes führen. Durch eine Zweiteilung mit der beschriebenen Kinematik allerdings führt ein Drehmoment um die Hochachse des Gerätes zu einer Verdrehung zwischen oberem und unterem Teil des Geräts, wobei sich während des Verdrehens der obere und der untere Teil voneinander abheben, da die Außenumfangskante des oberen Teils am unteren Teil entlang geführt wird (oder umgekehrt) und in Abhängigkeit der Winkellage des Bolzens relativ zur Normalen der beiden Kontaktebenen mehr oder weniger stark eine Bewegungskurve vollzieht. Dadurch wird der Schwerpunkt des oberen Teils des Geräts angehoben. Durch die Anhebung des Schwerpunkts bewirkt die Gewichtskraft des oberen Teils der Vorrichtung ein Rückstellmoment, wodurch sich das Gerät wieder zurück in seine Ausgangslage bewegt. Dadurch können ruckartige Bewegungen eines Benutzers auf der Vorrichtung abgefedert bzw. gedämpft und stabilisiert werden.

Zwischen den oben beschriebenen Kontaktflächen des oberen und unteren Teils des Gerätes kann vorteilhafterweise ein Dämpfungselement vorgesehen sein, beispielsweise aus einem gummiartigen Material, welches eine zusätzliche dämpfende Wirkung aufbringt. Dieses Dämpfungselement könnte kreisförmig ausgeführt sein und zwischen die Kontaktflächen eingelegt werden. Des Weiteren kann es eine Durchgangsbohrung zur Aufnahme des Bolzens aufweisen.

Bei einer Ausführungsform der Erfindung können alle Elemente der Auflagevorrichtung, also die Schalen zur Aufnahme von Unterarmen und Unterschenkeln, sowie die Strebenelemente und Griffstücke relativ zueinander starr vorgesehen sein. Durch eine solche Anordnung ist es für einen Benutzer besonders einfach und präzise möglich, seinen Schwerpunkt so zu verlagern, wie es für eine aktuelle Anwendung möglich ist.

In vorteilhafter Weise weist die Auflagevorrichtung zum Stützen der Körperteile zwei Armschalen auf, welche jeweils einen Unterarm des Körpers abstützen, sowie zwei Beinschalen zum jeweiligen Abstützen eines Unterschenkels des Körpers. Durch solch eine Anordnung ist es dem Benutzer möglich, seinen Hüftbereich frei zu bewegen, um möglichst einfach eine Schwerpunktverlagerung ausführen zu können.

Vorteilhafterweise weist die Auflagevorrichtung zum Stützen der Körperteile außerdem zwei Strebenelemente auf, zum jeweiligen Abstützen einer Fußsohle. Diese Streben sind in besonderer Weise dazu geeignet, den menschlichen Körper in seiner Längsrichtung in der Lage zu sichern. Des Weiteren erleichtern die Fußstützen ein Aufsteigen auf die Vorrichtung. Idealerweise wird das Gerät, bevor es bestiegen wird, so in Position gebracht, dass die Fußstreben selbst oder ein Bereich um diese herum Bodenkontakt bekommen. Dadurch wird der bewegliche Teil des Geräts stabilisiert und kann von einem Benutzer einfach und sicher bestiegen werden.

Vorteilhafterweise weist die Auflagevorrichtung zum Stützen der Körperteile außerdem zwei Griffelemente auf, welche jeweils von einer Hand des Benutzers umgriffen werden können, so dass sich der Benutzer einfach in seiner Lage sichern bzw. festhalten kann. Der Benutzer kann sich durch die Abstützmöglichkeiten zwischen Fußstreben und Griffelementen in das Gerät hineinstemmen und seinen Körperschwerpunkt somit besonders einfach und definiert verlagern.

Des Weiteren kann in einer bevorzugten Ausführungsform das Griffelement mit der jeweiligen dazugehörigen Armschale als Einheit ausgebildet sein. Zugehörig bedeutet, dass es sich um die Armschale handelt, welche dem Griffelement am nächsten ist. Des Weiteren kann jede Einheit aus Armschale und Griffelement unabhängig von der anderen Einheit verschiebbar vorgesehen sein. Eine solche Verschiebung kann dadurch ermöglicht werden, dass die Einheiten aus Armschale und Griffelement auf einem Schienensystem geführt werden, welches sich zwischen beweglichem Teil des Geräts und der Einheit aus Armschale und Griffelement befindet.

Vorteilhafterweise weist das Gerät eine Erfassungsvorrichtung zum Erfassen der aktuellen Position jedes beweglichen Teils des Gerätes auf, sowie eine Übertragungsvorrichtung zum Übertragen der Positionsdaten. Durch eine solche Ausführungsform ergeben sich vielfältige Anwendungsmöglichkeiten der Erfindung. Durch eine Erfassung der Positionsdaten ist es möglich, diese an eine Recheneinheit weiterzugeben, wodurch Anwendungen zur Simulation von virtuellen Realitäten realisiert werden können. Beispielsweise ist es dadurch möglich, in einem Computerspiel oder einer Simulatoranwendung die Bewegungen der beweglichen Teile des Gerätes zum Steuern von Funktionen zu verwenden. Zum Steuern eines Flugzeuges während einer Flugsimulatoranwendung wäre es beispielsweise denkbar, dass ein Benutzer des Gerätes durch Schwerpunktverlagerung sich selbst und die beweglichen Teile des Gerätes um eine Längsachse dreht, um dadurch das Flugzeug im Flugsimulator ebenfalls um seine Längsachse drehen zu lassen. Um das Flugzeug außerdem um seine Querachse zu steuern, könnte ein Benutzer sich selbst und den beweglichen Teil der Vorrichtung ebenfalls um eine Querachse drehen bzw. eine solche Drehung verursachen, idealerweise durch Verlagerung seines Körperschwerpunkts. Um das Seitenruder des Flugzeugs zu betätigen, also eine Drehung des Flugzeugs um die Hochachse auszulösen, wäre es denkbar, dass ein Benutzer gleichzeitig eine Einheit aus Armschale und Griffelement nach vorne bewegen muss, und eine andere nach hinten.

Des Weiteren ist es denkbar, dass das Gerät wenigstens einen Motor und/oder wenigstens ein Dämpfungselement aufweist, um auf die Bewegungen des Geräts bzw. der darauf befindlichen Person Einfluss nehmen zu können. Beispielsweise könnten aus einer Computeranwendung heraus Effekte generiert werden, welche zu einer Lageänderung des beweglichen Teils des Gerätes und somit auch des darauf befindlichen Benutzers führt. Bei der Bedienung eines Computerrennspiels beispielsweise könnte ein Benutzer während eines Beschleunigungsvorgangs nach hinten gekippt werden, während eines Bremsvorgangs nach vorne gekippt werden, und beim Durchfahren von Kurven zu der entsprechenden Seite gekippt werden. Beim Durchfahren einer Linkskurve könnte ein Verkippen der Vorrichtung zur gleichen Seite, also ebenfalls nach links ausgelöst werden, um beim Benutzer einen Effekt zu erzeugen, der einem "sich in die Kurve legen" entspricht. Allerdings wäre es auch denkbar, beim Durchfahren einer Linkskurve ein Verkippen des beweglichen Teils des Gerätes nach rechts auszulösen, um die Einwirkung von Fliehkraft auf den Benutzer zu simulieren. Es wäre ebenfalls denkbar, die Griffelemente beweglich auszuführen, und die aktuelle Position der Griffelemente durch einen Sensor zu erfassen und an die Recheneinheit weiterzugeben. Die Griffelemente könnten so ausgeführt werden, dass sich diese wie ein Gasgriff eines Motorrads drehen lassen. Eine solche Ausführung könnte Anwendung finden, falls ein Motorradrennen simuliert werden soll. Die Bewegungsmöglichkeit der Einheiten aus Armschale und Griffelement auf einem Schienensystem könnte des Weiteren dazu erfasst werden, um in einer Simulatoranwendung ein Beschleunigen oder Bremsen zu steuern, oder eine andere gewünschte Funktion.

Des Weiteren wäre es denkbar, dass die einzelnen Elemente zum Stützen der Körperextremitäten, die beispielsweise der Unterarme und Unterschenkel, zueinander bewegbar ausgeführt sind. Durch eine entsprechende mechanische Kinematik der Bewegungsmöglichkeiten dieser Elemente oder durch eine Beeinflussung der Bewegungsmöglichkeiten mittels Motoren oder Dämpfungselemente wäre es beispielsweise möglich, einen Benutzer in bestimmte Bewegungsabläufe zu zwingen oder ihm nur spezielle Bewegungsabläufe zu ermöglichen. Dabei wäre es denkbar, einem Benutzer während einer Schwimmsimulatoranwendung eine Bewegung zu ermöglichen, welche dem Kraulschwimmen entspricht. Des Weiteren wäre es möglich, die Bewegungen des Benutzers mittels Elektromotoren oder Dämpfungselementen zu erschweren. Dadurch ergeben sich weitere vielfältige Anwendungsmöglichkeiten des Geräts, wie beispielsweise der Einsatz als Sportsimulator, wobei der Benutzer während der Simulatoranwendung eine körperliche Betätigung ausführen muss, welche der körperlichen Betätigung bei der Ausübung der entsprechenden Sportart entspricht oder zumindest ähnelt. Während einer Schwimmsimulatoranwendung beispielsweise könnte mittels Motoren oder Dämpfungselementen der Wasserwiderstand simuliert werden, wie er auch beim tatsächlichen Schwimmen im Wasser auftreten würde und einer Bewegung des Schwimmers entgegenwirkt. Das Risiko des Ertrinkens, welchem ein Schwimmer permanent im Falle einer Ohnmacht oder Erschöpfung ausgesetzt ist, kann durch eine solche Schwimmsimulatoranwendung in erheblichem Maße reduziert werden. Trotzdem tritt der gewünschte Trainingseffekt ein. Auch das Risiko eines Absturzes für Piloten kann vermieden werden, wenn diese den Flugsport nur noch im Simulator ausüben, und nicht mehr im freien Luftraum.

Anhand der nachfolgend beigefügten Zeichnungen wird ein Ausführungsbeispiel der Erfindung erläutert.

Es wird gezeigt:
- Fig. 1:: ein Ausführungsbeispiel der Erfindung in perspektivischer Ansicht.
- Fig. 2:: ein Ausführungsbeispiel der Erfindung mit Ansicht von vorne.
- Fig. 3:: ein Ausführungsbeispiel der Erfindung mit der Ansicht von links.
- Fig. 4:: ein Ausführungsbeispiel der Erfindung mit der Ansicht von oben.

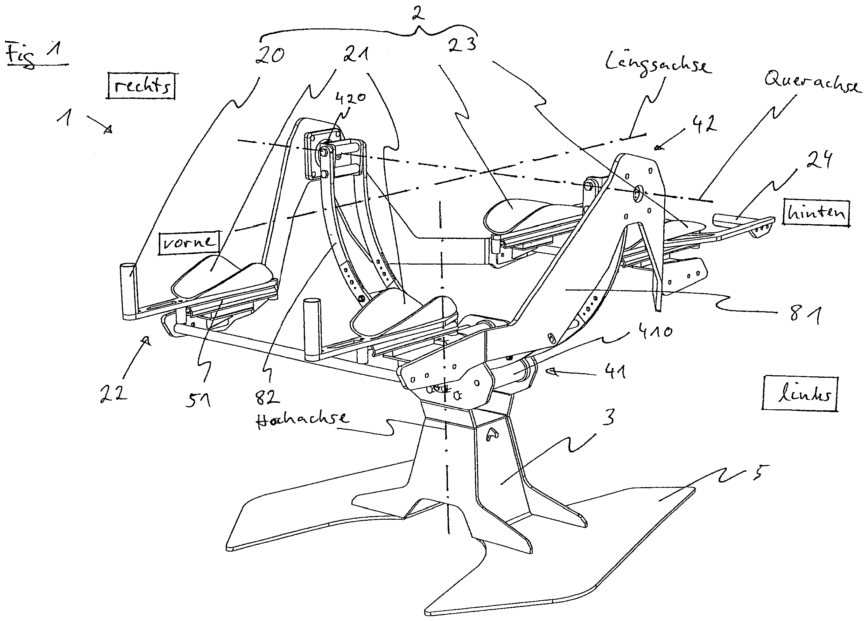

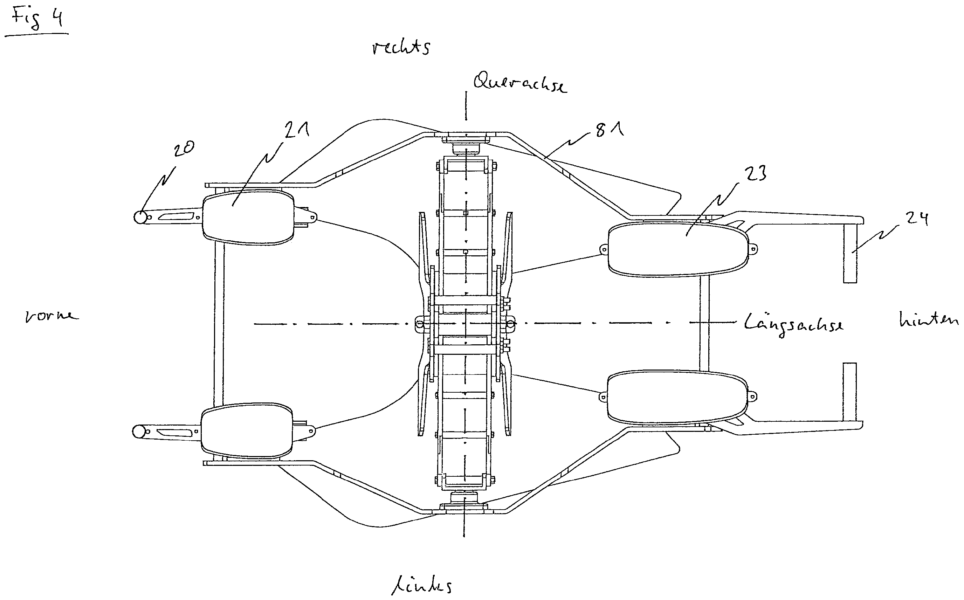

Fig. 1 zeigt eine perspektivische Ansicht des Geräts 1 zum Ausführen von Bewegungen durch Schwerpunktverlagerung und/oder Muskelbetätigung eines menschlichen Körpers. Es wird eine Längsachse gezeigt, welche in Längsrichtung des Geräts verläuft. Es wird eine Querachse gezeigt, welche in Querrichtung des Geräts verläuft. Und es wird eine Hochachse gezeigt, welche in vertikaler Richtung verläuft. Die Hochachse kann vertikal verlaufen, wie im vorliegenden Ausführungsbeispiel gezeigt, oder aber auch nach vorne bzw. hinten geneigt sein. Die Richtungs- und Positionsangaben vorne, hinten, links und rechts sind ebenfalls in Fig. 1 eingezeichnet, und werden zusätzlich in der Draufsicht in Fig. 4 eindeutig gezeigt. Die in der Fig. 1 gezeigte Ausführungsform weist eine Grundplatte 5 und eine Basis 3 auf, durch welche das gesamte Gerät 1 auf dem Boden aufliegt. Die Auflagevorrichtung 2 weist Griffelemente 20, Armschalen 21 sowie Beinschalen 23 auf. Durch die Auflagevorrichtung 2 wird der Körper eines Benutzers auf der Vorrichtung abgestützt. Die einzelnen Teile der Auflagevorrichtung sind an ein Rahmenelement 81 angebunden. Die Armschale 21 auf der rechten Seite des Geräts bildet mit dem Griffelement 20 auf der rechten Seite des Geräts eine Einheit, analog dazu bildet das Griffelement 20 auf der linken Seite eine Einheit mit der Armschale 21 auf der linken Seite des Geräts 1. Das Griffelement 20 und die Armschale 21, welche jeweils eine Einheit bilden, sind in dieser Ausführungsform fest miteinander verbunden. Jede Einheit ist durch ein Schienenelement 51 mit dem Rahmenelement 81 verbunden, wodurch sich die jeweiligen Einheiten in festgelegten Grenzen in Längsrichtung des Geräts 1 verschieben können. Die einzelnen Elemente der Auflagevorrichtung 2 können zusammen mit dem Rahmenelement 81 um die Querachse des Geräts 1 gekippt werden. Diese Kippfunktionalität wird durch eine Anordnung 420 aus Welle und Lager ermöglicht, welche die die Auflagevorrichtung 2 aufnehmende Tragstruktur (Rahmenelement 81) mit einem bogenförmigen weiteren Tragelement (Bogenelement 82) verbindet. Dieses weitere Bogenelement 82 wird durch eine Rollenauflage 41 gestützt und durch diese geführt, so dass sich die Auflagevorrichtung 2 zusammen mit dem Rahmenelement 81 und dem Bogenelement 82 um die Längsachse des Geräts drehen kann. Die Rollenführung 41 weist eine bogenförmige Anordnung von Rollenelementen 410 auf, auf welchen die Komponenten Auflagevorrichtung 2, Rahmenelement 81 und Bogenelement 82 gelagert werden, wobei zusätzlich wenigstens eine Rolle in vertikaler Richtung über dem Bogenelement 82 angeordnet ist, um diese Komponenten auch in einer vertikalen Richtung zu sichern. Die Komponenten Auflagevorrichtung 2, Rahmenelement 81 und Bogenelement 82 werden als der bewegliche Teil des Geräts bezeichnet. Am hinteren Ende der Auflagevorrichtung 2 sind des Weiteren Strebenelemente 24 angeordnet, durch welche sich ein Benutzer mit den Fußsohlen abstützen kann. Die Hochachse des Geräts 1 ist in dieser Ausführunsform vertikal angeordnet. Es wäre allerdings auch denkbar, dass die Hochachse nach vorne oder hinten geneigt ist. Des Weiteren erstreckt sich die Längsachse in dieser Ausführungsform horizontal. Es wäre auch denkbar, dass die Längsachse nach unten oder oben gekippt ist. Die Querachse ist in diesem Ausführungsbeispiel bezüglich des Rahmenelements 81 fix angeordnet. Falls das Rahmenelement 81 um die Längsachse gekippt wird, kippt demnach auch die Querachse des Geräts. Falls der bewegliche Teil des Geräts 1 bereits um die Längsachse gekippt ist, erfolgt ein weiteres Verkippen der Auflagevorrichtung 2 zusammen mit dem Rahmenelement 81 deshalb um die ebenfalls gekippte Querachse.

Das bogenförmige Tragelement bzw. das Bogenelement 82 muss nicht zwingend bogenförmig ausgeführt sein. Dieses Tragelement kann in einer anderen Ausführungsform beispielsweise in seiner Form einer beliebigen Kurvenfunktion folgen. Es wäre des Weiteren außerdem denkbar, das Tragelement als geschlossenen Kreis auszuführen. Bei einer solchen Ausführungsform könnte es für den Benutzer möglich sein, mit dem Gerät eine volle Rotation um die Längsachse zu vollziehen.

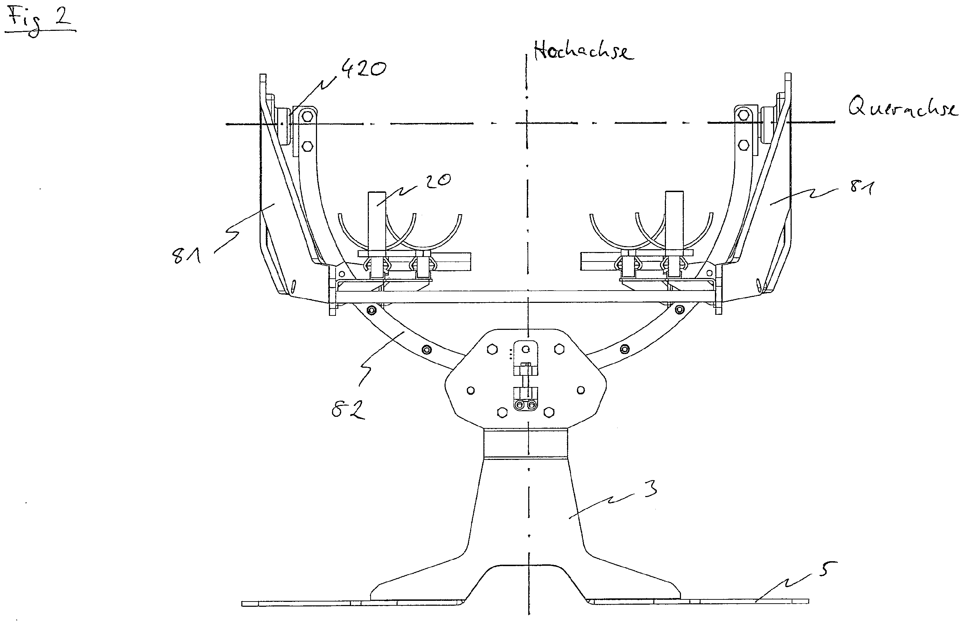

Fig. 2 zeigt die Vorderansicht eines Geräts 1 zum Ausführen von Bewegungen durch Schwerpunktverlagerung und/oder Muskelbetätigung eines menschlichen Körpers, wobei die Hochachse des Geräts in vertikaler Richtung und die Querachse des Geräts in horizontaler Richtung verläuft. In dieser Ansicht ist gut zu erkennen, dass das Rahmenelement 81 zwei Teile aufweist, welche auf der rechten und linken Seite der Abbildung angeordnet sind. Die einzelnen Teile des Geräts 1 können aus verschiedenen Materialien hergestellt werden. Beispielsweise aus kohlefaserverstärktem Kunststoff, herkömlichem Kunstoff oder Metall. In einer bevorzugten Ausführungsform ist die gesamte Konstruktion des Geräts möglichst leicht ausgeführt. Durch eine geringe Masse, insbesondere der beweglichen Teile des Geräts, kann der Bedienkomfort für den Benutzer erhöht werden, da ein Verkippen einfacher herbeigeführt werden kann.

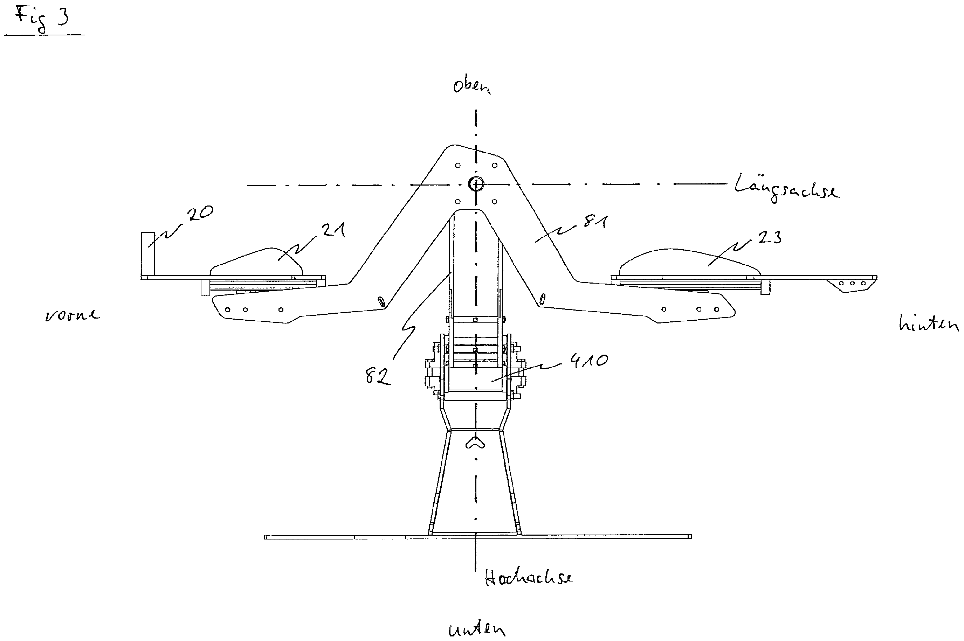

Fig. 3 zeigt eine Seitenansicht einer Ausführungsform des Geräts 1, wobei die Längsachse des Geräts in horizontaler Richtung verläuft, und die Hochachse in vertikaler Richtung. Wenn das Rahmenelement 81 um die Querachse des Geräts kippt, wobei die Querachse in Richtung der Zeichnungsebene verläuft, also aus der Zeichnungsebene heraustritt, kippt die Auflagevorrichtung 2, welche unter anderem die Armschalen 21, die Griffelemente 20 und die Beinschalen 23 aufweist, ebenfalls um die Querachse des Geräts.

Fig. 4 zeigt eine Draufsicht auf eine Ausführungsform des Gerät 1, wobei in der Abbildung die Querachse des Geräts vertikal und die Längsachse des Geräts horizontal verläuft, wobei auf der rechten Seite der Abbildung der hintere Bereich des Geräts 1 angeordnet ist, auf der linken Seite der Abbildung der vordere Bereich des Geräts 1, am oberen Rand der Abbildung der rechte Bereich des Geräts 1 und am unteren Rand der Abbildung der linke Bereich des Geräts 1. Des Weiteren sind die Beinauflagen 23, die Fußstreben 24, die Armschalen 21 sowie die Griffelemente 20 zu erkennen.

## Patentansprüche

1. Gerät (1) zum Ausführen von Bewegungen durch Schwerpunktverlagerung und/oder Muskelbetätigung eines menschlichen Körpers, aufweisend:
eine Auflagevorrichtung (2) zum Stützen von Körperteilen, wobei der Hüftbereich des Körpers frei bewegbar ist,
eine Basis (3) zum Abstützen von Kräften am Boden und/oder an einer Wand,
eine Kinematikvorrichtung zum Verbinden von Auflagevorrichtung (2) und Basis (3), wobei die Kinematikvorrichtung dazu angepasst ist, eine Bewegung des Körpers um eine virtuelle Längsachse und um eine virtuelle Querachse zu ermöglichen,
**dadurch gekennzeichnet, dass** die Auflagevorrichtung (2) zum Stützen der Körperteile aufweist: zwei Armschalen (21) zum jeweiligen Abstützen eines Unterarms des Körpers, sowie zwei Beinschalen (23) zum jeweiligen Abstützen eines Unterschenkels des Körpers.

2. Gerät (1) gemäß Anspruch 1,
wobei die Auflagevorrichtung (2) den Körper ausschließlich an seinen Extremitäten abstützt.

3. Gerät (1) gemäß Anspruch 2,
wobei Längsachse und Querachse einen Schnittpunkt bilden.

4. Gerät (1) gemäß einem der vorherigen Ansprüche,
wobei der gemeinsame Schwerpunkt von Körper und dem beweglichen Teil des Geräts (1) in einem Ruhezustand im oder unter dem Schnittpunkt von Längs- und Querachse liegt.

5. Gerät (1) gemäß einem der vorherigen Ansprüche,
wobei die Basis (3) eine im Wesentlichen vertikale Hochachse aufweist,
wobei die Hochachse eine Kontaktebene schneidet, welche das Gerät (1) in einen oberen und in einen unteren Teil aufteilt,
wobei der obere Teil des Geräts (1) gegenüber dem unteren Teil um die Hochachse verdrehbar ist,
wobei die Hochachse zur Normalen der Kontaktebene nicht identisch ist,
wobei resultierend aus einem Verdrehen der Gesamtschwerpunkt des Geräts (1) zum Erzeugen eines Rückstellmoments anhebbar ist.

6. Gerät (1) gemäß dem vorherigen Anspruch,
wobei zwischen oberem und unterem Teil des Geräts (1) ein Dämpfungselement vorgesehen ist.

7. Gerät (1) gemäß einem der vorherigen Ansprüche,
wobei alle Elemente der Auflagevorrichtung (2) relativ zueinander nicht beweglich sind.

8. Gerät (1) gemäß einem der vorherigen Ansprüche,
wobei die Auflagevorrichtung (2) zum Stützen der Körperteile zwei Strebenelemente (24) zum jeweiligen Abstützen einer Fußsohle aufweist.

9. Gerät (1) gemäß einem der vorherigen Ansprüche,
wobei die Auflagevorrichtung (2) zum Stützen der Körperteile zwei Griffelemente (20) zum jeweiligen Umgreifen mit einer Hand aufweist.

10. Gerät (1) gemäß dem vorherigen Anspruch,
wobei jedes Griffelement (20) mit der dazugehörigen Armschale (21) als Einheit (22) ausgebildet ist,
wobei jede Einheit (22) aus Armschale (21) und Griffelement (20) unabhängig von der anderen Einheit (22) verschiebbar ist.

11. Gerät (1) gemäß einem der vorherigen Ansprüche, aufweisend
eine Positionserfassungsvorrichtung zum Erfassen der aktuellen Position jedes beweglichen Teils der Vorrichtung, sowie eine Übertragungsvorrichtung zum Übertragen der Positionsdaten zur Weiterverarbeitung an eine Recheneinheit.

12. Gerät (1) gemäß einem der vorherigen Ansprüche, aufweisend wenigstens einen Motor und/oder wenigstens ein Dämpfungselement,
wodurch die Bewegung der beweglichen Elemente des Geräts (1) beeinflusst werden kann,
wobei das Dämpfungselement dazu angepasst ist, einer Bewegung entgegenzuwirken,
wobei der Motor dazu angepasst ist, einer Bewegung entgegenzuwirken und/oder eine Bewegung zu unterstützen.

13. Gerät (1) gemäß einem der vorherigen Ansprüche,
wobei die einzelnen den Körper stützenden Elemente der Auflagevorrichtung (2) relativ zueinander bewegbar sind.

14. Gerät (1) gemäß einem der vorherigen Ansprüche, aufweisend
Anschläge zum Begrenzen der Bewegungsmöglichkeit der beweglichen Teile des Geräts,
wobei die Freiheitsgrade der Bewegungsmöglichkeit und die Anschläge beliebig anpassbar sind.

15. Gerät (1) gemäß einem der vorherigen Ansprüche,
wobei die Kinematikvorrichtung ein Tragelement (82) in der Gestalt eines geschlossenen Kreises oder zumindest eines Kreisbogensegments aufweist, wobei das Tragelement (82) dazu angepasst ist, dem menschlichen Körper ein Rotieren um die Längsachse des Geräts zu ermöglichen.

16. Verfahren zum Ausführen von Bewegungen mit einem Gerät (1) gemäß einem der Ansprüche 1 bis 15,
wobei die Auflagevorrichtung (2) zusammen mit den sich darauf abstützenden Körperteilen durch ein Verschieben des Körperschwerpunkts um Querachse und Längsachse bewegt wird.

17. Verfahren zum Ausführen von Bewegungen mit einem Gerät (1) gemäß einem der Ansprüche 10 bis 15,
wobei durch ein Verschieben der Einheiten (22) aus Armschale (21) und Griffelement (20) ein Steuersignal generierbar ist.

18. Verfahren zum Ausführen von Bewegungen mit einem Gerät (1) gemäß einem der Ansprüche 5 bis 15, mit den Schritten:
Aufbringen eines Drehmoments um die Hochachse des Geräts (1) durch einen Benutzer, wodurch ein Verdrehen des oberen Teils des Geräts (1) gegenüber dem unteren Teil des Geräts (1) verursacht wird,
Verlagern des Gesamtschwerpunkts des Geräts in vertikaler Richtung nach oben,
Generieren eines Rückstellmoments durch das Anheben des Gesamtschwerpunkts nach oben, Aufheben der Verdrehung durch Verlagern des Gesamtschwerpunkts in die Ausgangslage in vertikaler Richtung nach unten, verursacht durch Schwerkraft.

19. System aus einem Gerät (1) gemäß einem der Ansprüche 1 bis 15 und einer visuellen Ausgabevorrichtung.

20. System gemäß dem vorherigen Anspruch,
wobei die visuelle Ausgabevorrichtung eine auf dem Kopf des menschlichen Körpers getragene Videobrille ist.

21. System gemäß dem vorherigen Anspruch,
wobei die Position des Kopfes und der darauf getragenen Videobrille sowie die Position der beweglichen Teile des Geräts (1) zum Ausführen von Bewegungen durch Schwerpunktverlagerung und/oder Muskelbetätigung eines menschlichen Körpers unabhängig voneinander erfasst und weiterverarbeitet werden.

22. System gemäß Anspruch 19,
wobei der Benutzer auf dem Gerät wenigstens teilweise von der visuellen Ausgabevorrichtung umschlossen wird.

23. System gemäß einem der vorherigen Ansprüche 19 bis 22,
wobei die visuelle Ausgabevorrichtung dazu angepasst ist, stehende und/oder bewegte Bilder auszugeben.

24. System gemäß einem der vorherigen Ansprüche 19 bis 23,
wobei die visuelle Ausgabevorrichtung dazu angepasst ist, dreidimensionale Bilder auszugeben.

## Claims

1. A device (1) for carrying out movements by shifting the centre of gravity and/or actuating muscles of a human body, said device comprising:
a supporting means (2) for supporting body parts, wherein the waist region of the body is freely movable,
a base (3) for supporting forces on the ground (2) and/or on a wall,
a kinematic device for connecting the supporting means (2) and said base (3), wherein said kinematic device is adapted to allow a movement of the body about a virtual longitudinal axis and about a virtual lateral axis, **characterized by** that said supporting means (2) for supporting the body parts comprises: two arm shells (21) for respectively supporting a forearm of the body, as well as two leg shells (23) for respectively supporting a lower leg of the body.

2. The device (1) according to claim 1,
wherein said supporting means (2) supports the body exclusively at the body's extremities.

3. The device (1) according to claim 2,
wherein the longitudinal axis and the transverse axis form an intersection point.

4. The device (1) according to one of the preceding claims,
wherein the common center of gravity of the body and the movable part of said device (1) is located at or below said intersection point of the longitudinal and transverse axes in a resting state.

5. The device (1) according to one of the preceding claims,
wherein said base (3) has a height axis, which is substantially vertical,
wherein said height axis intersects a contact plane which divides said device (1) into upper and lower parts,
wherein said upper part of said device (1) is rotatable about said height axis relative to said lower part,
wherein said height axis is not identical to the normal of said contact plane,
wherein the overall center of gravity of said device (1) is raisable as a result of a relative rotation in order to generate a restoring moment.

6. The device (1) according to the preceding claim,
wherein a damping element is provided between said upper and lower parts of said device (1).

7. The device (1) according to any one of the preceding claims,
wherein all elements of said supporting means (2) are not movable relative to one another.

8. The device (1) according to one of the preceding claims,
wherein said supporting means (2) for supporting the body parts comprises two strut elements (24) for respectively supporting a sole of a foot.

9. The device (1) according to one of the preceding claims,
wherein said supporting means (2) for supporting the body parts comprises two handle elements (20), each to be gripped with one hand.

10. The device (1) according to the preceding claim,
wherein each handle element (20) is formed as a unit (22) with the corresponding arm shell (21),
wherein each unit (22) consisting of said arm shell (21) and said handle element (20) is displaceable independently of the other unit (22).

11. The device (1) according to one of the preceding claims, comprising:
a position detecting means for detecting the current position of each movable part of said device, and a transmitting means for transmitting the position data to a computing unit for further processing.

12. The device (1) according to one of the preceding claims, comprising at least one motor and/or at least one damping element,
whereby the movement of the movable elements of said device (1) can be influenced,
wherein said damping element is adapted to counteract a movement,
wherein said motor is adapted to counteract a movement and/or to assist a movement.

13. The device (1) according to one of the preceding claims,
wherein the individual elements of said supporting means (2), which support the body, are moveable relative to one another.

14. The device (1) according to one of the preceding claims, comprising:
stops for limiting the possibility of movement of the movable parts of said device,
wherein the degrees of freedom of the possibility of movement and said stops are adjustable at will.

15. The device (1) according to one of the preceding claims,
wherein said kinematic device comprises a supporting element (82) in the form of a closed circle or at least a circular arc segment, said supporting element (82) being adapted to allow a rotation of the human body about the longitudinal axis of said device.

16. Method for carrying out movements with a device (1) according to one of the claims 1 to 15,
wherein said supporting means (2) is moved, together with the body parts supported thereon, about the lateral axis and the longitudinal axis by a shift of the center of gravity of the body.

17. Method for carrying out movements with a device (1) according to one of claims 10 to 15,
wherein a control signal is generatable by moving said units (22) of said arm shell (21) and said handle element (20).

18. Method for carrying out movements with a device (1) according to one of claims 5 to 15, the method comprising the steps of:
applying a torque about the height axis of said device (1) by a user, thereby preventing a rotation of said upper part of said device (1) relative to said lower part of said device (1) from being caused,
shifting the overall center of gravity of said device upwards in the vertical direction,
generating a restoring moment by raising the overall center of gravity upwards, canceling the rotation by shifting the overall center of gravity downwards in the vertical direction into the initial position, which is caused by gravity.

19. A system comprising a device (1) according to one of claims 1 to 15 and a visual output apparatus.

20. The system according to the preceding claim,
wherein said visual output apparatus comprises video goggles worn on the head of the human body.

21. The system according to the preceding claim,
wherein the position of the head and said video goggles worn thereon as well as the position of the movable parts of said device (1) are independently detected and further processed to carry out movements by shifting the centre of gravity and/or actuating muscles of a human body.

22. The system of claim 19,
wherein the user is at least partially surrounded by said visual output apparatus on said device.

23. The system according to one of the preceding claims 19 to 22,
wherein said visual output apparatus is adapted to output still and/or moving images.

24. The system according to one of the preceding claims 19 to 23,
wherein said visual output apparatus is adapted to output three-dimensional images.

## Revendications

1. Appareil (1) servant à exécuter des déplacements par déplacement du centre de gravité et/ou actionnement des muscles d'un corps humain, présentant :
un dispositif de réception (2) servant à soutenir des parties corporelles, dans lequel la zone des hanches du corps peut être déplacée librement,
une base (3) servant à supporter des forces au niveau du sol et/ou d'un mur,
un dispositif cinématique servant à relier le dispositif de réception (2) et la base (3), dans lequel le dispositif cinématique est adapté pour permettre un déplacement du corps autour d'un axe longitudinal virtuel et autour d'un axe transversal virtuel,
**caractérisé en ce que** le dispositif de réception (2) servant à soutenir les parties corporelles présente : deux coques de bras (21) servant à supporter respectivement un avant-bras du corps, ainsi que deux coques de jambe (23) servant à supporter respectivement une jambe inférieure du corps.

2. Appareil (1) selon la revendication 1,
dans lequel le dispositif de réception (2) supporte le corps exclusivement au niveau de ses extrémités.

3. Appareil (1) selon la revendication 2,
dans lequel l'axe longitudinal et l'axe transversal forment un point d'intersection.

4. Appareil (1) selon l'une quelconque des revendications précédentes,
dans lequel le centre de gravité commun du corps de la partie mobile de l'appareil (1) se situe dans un état de repos dans ou sous le point d'intersection de l'axe longitudinal et de l'axe transversal.

5. Appareil (1) selon l'une quelconque des revendications précédentes,
dans lequel la base (3) présente un axe en hauteur sensiblement vertical,
dans lequel l'axe en hauteur croise un plan de contact, lequel divise l'appareil (1) en une partie supérieure et en une partie inférieure,
dans lequel la partie supérieure de l'appareil (1) peut être tournée autour de l'axe en hauteur par rapport à la partie inférieure,
dans lequel l'axe en hauteur n'est pas identique par rapport à la normale du plan de contact,
dans lequel en conséquence d'une rotation, l'ensemble du centre de gravité de l'appareil (1) peut être soulevé pour générer un couple de rappel.

6. Appareil (1) selon la revendication précédente,
dans lequel un élément d'amortissement est prévu entre la partie supérieure et la partie inférieure de l'appareil (1).

7. Appareil (1) selon l'une quelconque des revendications précédentes,
dans lequel tous les éléments du dispositif de réception (2) ne sont pas mobiles relativement les uns par rapport aux autres.

8. Appareil (1) selon l'une quelconque des revendications précédentes,
dans lequel le dispositif de réception (2) servant à soutenir les parties corporelles présente deux éléments formant nervures (24) servant à supporter respectivement une plante de pied.

9. Appareil (1) selon l'une quelconque des revendications précédentes,
dans lequel le dispositif de réception (2) servant à soutenir les parties corporelles présente deux éléments de préhension (20) destinés à être entourés respectivement d'une main.

10. Appareil (1) selon la revendication précédente,
dans lequel chaque élément de préhension (20) est réalisé sous la forme d'une unité (22) avec la coque de bras (21) associée,
dans lequel chaque unité (22) composée de la coque de bras (21) et de l'élément de préhension (20) peut être coulissée indépendamment de l'autre unité (22).

11. Appareil (1) selon l'une quelconque des revendications précédentes, présentant un dispositif de détection de position servant à détecter la position instantanée de chaque partie mobile du dispositif, ainsi qu'un dispositif de transmission servant à transmettre les données de position aux fins du traitement ultérieur à une unité de calcul.

12. Appareil (1) selon l'une quelconque des revendications précédentes, présentant au moins un moteur et/ou au moins un élément d'amortissement,
ce qui permet d'influencer le déplacement des éléments mobiles de l'appareil (1),
dans lequel l'élément d'amortissement est adapté pour contrecarrer un déplacement,
dans lequel le moteur est adapté pour contrecarrer un déplacement et/ou soutenir un déplacement.

13. Appareil (1) selon l'une quelconque des revendications précédentes,
dans lequel les divers éléments soutenant le corps du dispositif de réception (2) peuvent être déplacés relativement les uns par rapport aux autres.

14. Appareil (1) selon l'une quelconque des revendications précédentes, présentant des butées servant à limiter la possibilité de déplacement des parties mobiles de l'appareil,
dans lequel les degrés de liberté de la possibilité de déplacement et les butées peuvent être adaptés au choix.

15. Appareil (1) selon l'une quelconque des revendications précédentes,
dans lequel le dispositif cinématique présente un élément porteur (82) sous la forme d'un cercle fermé ou au moins d'un segment d'arc de cercle, dans lequel l'élément porteur (82) est adapté pour permettre au corps humain une rotation autour de l'axe longitudinal de l'appareil.

16. Procédé servant à exécuter des déplacements avec un appareil (1) selon l'une quelconque des revendications 1 à 15,
dans lequel le dispositif de réception (2) est déplacé conjointement avec les parties corporelles soutenues sur celui-ci par un déplacement du centre de gravité du corps autour de l'axe transversal et de l'axe longitudinal.

17. Procédé servant à exécuter des déplacements avec un appareil (1) selon l'une quelconque des revendications 10 à 15,
dans lequel un signal de commande peut être généré par un coulissement des unités (22) composées de la coque de bras (21) et de l'élément de préhension (20).

18. Procédé servant à exécuter des déplacements avec un appareil (1) selon l'une quelconque des revendications 5 à 15,
avec les étapes :
d'application d'un couple de rotation autour de l'axe en hauteur de l'appareil (1) par un utilisateur, ce qui permet d'entraîner une rotation de la partie supérieure de l'appareil (1) par rapport à la partie inférieure de l'appareil (1),
de déplacement de l'ensemble du centre de gravité de l'appareil dans une direction verticale vers le haut,
de génération d'un couple de rappel en soulevant l'ensemble du centre de gravité vers le haut, d'annulation de la rotation par le déplacement de l'ensemble du centre de gravité dans la position de départ dans une direction verticale vers le bas, entraînée par la force de gravité.

19. Système composé d'un appareil (1) selon l'une quelconque des revendications 1 à 15 et d'un dispositif de sortie visuel.

20. Système selon la revendication précédente,
dans lequel le dispositif de sortie visuel est des lunettes vidéo portées sur la tête du corps humain.

21. Système selon la revendication précédente,
dans lequel la position de la tête et des lunettes vidéo portées sur celle-ci ainsi que la position des parties mobiles de l'appareil (1) servant à exécuter des déplacements par le déplacement du centre de gravité et/ou par actionnement de muscles d'un corps humain sont détectées indépendamment l'une de l'autre et sont traitées ultérieurement.

22. Système selon la revendication 19,
dans lequel l'utilisateur sur l'appareil est entouré au moins en partie par le dispositif de sortie visuel.

23. Système selon l'une quelconque des revendications précédentes 19 à 22,
dans lequel le dispositif de sortie visuel est adapté pour sortir des images fixes et/ou en mouvement.

24. Système selon l'une quelconque des revendications précédentes 19 à 23,
dans lequel le dispositif de sortie visuel est adapté pour sortir des images tridimensionnelles.
